# EUROPEAN PATENT APPLICATION

(11) **EP 1 970 670 A1**
(43) Date of publication of application: **17.09.2008**
(21) Application number: 08152153.6
(22) Date of filing: 29.02.2008
(51) Int. Cl.: G01C 21/34, G01C 21/36, G08G 1/0968

(54) **Route-selection-supporting device and method**

(30) Priority: 14.03.2007 JP 2007065672
(71) Applicant: Aisin AW Co., Ltd., Fujii-cho Anjo-shi, Aichi 444-1192 (JP)
(72) Inventor: Kano, Toshihiro, Okazaki-shi Aichi 444-8564 (JP); Igawa, Junichiro, Okazaki-shi Aichi 444-8564 (JP)
(74) Representative: TBK-Patent

(57) **Abstract**

According to a route-selection-supporting device and method for supporting route selection, a selection of a continuous road route on a map displayed on a display unit (40) is accepted. The continuous road route is accepted as a planned travel route. An endpoint-arrival time at which a vehicle can reach an endpoint of the planned travel route in a case where the vehicle travels by the planned travel route is estimated. Traffic information (30d) for a case where the vehicle starts to travel from the endpoint at the endpoint-arrival time is obtained. The traffic information (30d) is displayed on the display unit (40).

## Description

### BACKGROUND OF THE INVENTION

### 1. Field of the Invention

The present invention relates to a route-selection-supporting device and method for providing support for selection of a planned travel route.

### 2. Description of the Related Art

The technology for displaying traffic information for different time segments in one screen has been known in the related art (for example, Japanese Unexamined Patent Application Publication No. 2006-162323). In the related art, an estimated arrival time at which a vehicle can reach an arbitrary point from the present location is obtained on the basis of traffic information for each time segment, and traffic information for a time segment including the estimated arrival time is displayed. Additionally, the technology is disclosed in which after a provisional destination is set and traffic information concerning the vicinity of the provisional destination is displayed, the provisional destination is set as a fixed destination, and a recommended route to the fixed destination is displayed.

In the related art, it is difficult to provide accurate traffic information which is referred to in a case where a user sets a planned travel route himself/herself.

In other words, in the related art, although traffic information for each time segment is provided, it is difficult for a user to select a route himself/herself on the basis of the traffic information. Accordingly, even when various types of traffic information is provided, this means that the various types of traffic information is only provided, and it is difficult for a user to estimate a more preferable route himself/herself on the basis of the traffic information, and to set the more preferable route as a planned travel route.

Additionally, even when a provisional destination is set as described above, it is difficult to accurately calculate an estimated arrival time without determining a detail route to the provisional destination. Accordingly, even when a provisional destination is determined as described above, an estimated arrival time at which a vehicle can reach the provisional destination is roughly estimated, and traffic information provided as information for the estimated arrival time is not accurate.

### SUMMARY OF THE INVENTION

Accordingly, it is an object of the present invention to provide accurate traffic information which is referred to in a case where a user sets a planned travel route himself/herself.

According to an aspect of the present invention, there is provided a route-selection-supporting device including: display means for displaying an image including a map; planned-travel-route-accepting means for accepting a selection of a continuous road route on the map and accepting the continuous road route as a planned travel route; endpoint-arrival-time-estimating means for estimating an endpoint-arrival time at which a vehicle can reach an endpoint of the planned travel route in a case where the vehicle travels by the planned travel route; traffic-information-obtaining means for obtaining traffic information for a case where the vehicle starts to travel from the endpoint at the endpoint-arrival time; and display-control means for displaying the traffic information on the display means. In other words, traffic information concerning an arbitrary road is obtained by determining the planned travel route that is a portion of a route to the arbitrary road on the basis of an input provided by a user, and by estimating traffic information for a case where the endpoint of the planned travel route is considered as a reference point.

With this configuration, the endpoint-arrival time at which the vehicle can reach the endpoint can be estimated on the basis of the planned travel route. Because the endpoint-arrival time can be estimated for an individual planned travel route, the endpoint-arrival time can be accurately estimated. Traffic information for a case where the vehicle starts to travel from a starting point of the planned travel route, e.g., the present location of the vehicle, can be estimated in a condition with the smaller number of undetermined elements, compared with a case where the traffic information is estimated without specifying a planned travel route located on the way to the endpoint. In other words, the endpoint of the planned travel route is closer to an arbitrary road that the vehicle can travel along after reaching the endpoint than the starting point of the planned travel route. Accordingly, traffic information can be estimated in a condition where a location closer to the arbitrary road is set as a reference point (the endpoint of the planned travel route is set as a reference point). As a result, more accurate traffic information can be obtained.

It is only necessary for the display means to be capable of displaying an image, such as a map. Various types of display devices, for example, displays used to display routes or the like in navigation devices, can be used as the display means. It is only necessary for the planned-travel-route-accepting means to be capable of accepting a selection of a continuous road route on the map. In other words, it is only necessary for the planned-travel-route-accepting means to be capable of accepting an input of a selection of a continuous road route displayed on the map to specify a route of the vehicle. The planned-travel-route-accepting means may have a configuration in which a road displayed on the map is input with a human finger, an input device, such as a stylus, a cross key, or a remote controller, or the like. In such a case, for example, a configuration in which a selected planned travel route is displayed as an image different from images of other routes may be used.

The planned-travel-route-accepting means may be configured to have a touch-detection unit, and may also be configured to detect touching of a display surface of the display means. In other words, when the touch-detection unit detects touching corresponding to the continuous road route, the planned-travel-route-accepting means accepts the continuous road route as the planned travel route. It is only necessary for the touch-detection unit to be capable of detecting touching of the display surface of the display means. Various types of touch panels that can detect a pressure to a display surface, or a capacitance or an optical change on a display surface, or the like can be used. An object to be detected on the display surface may be a finger or an input device, such as a stylus.

It is only necessary for the planned-travel-route-accepting means to be capable of setting the continuous road route as the planned travel route. Accordingly, the planned-travel-route-accepting means may have a configuration in which an operation of selecting an individual road is repeated to accept an input of the planned travel route. The planned-travel-route-accepting means may also be configured to detect touching of the display surface based on a movement of tracing a road on the display surface to accept an input of the planned travel route. Various types of configurations can be used for the planned-travel-route-accepting means.

With the configuration of the planned-travel-route-accepting means in which a road on the map is traced with a finger or the like to input the planned travel route, while the user considers traffic information concerning an arbitrary location displayed on the display surface, the user can trace a road as the next route that the vehicle can take to select the planned travel route. Accordingly, the planned travel route can be determined in a very simple manner.

Regarding the planned travel route, the starting point, the endpoint, and a road on the way to the endpoint are specified. The endpoint is the farthest point of the planned travel route input through the planned-travel-route-accepting means, and can be sequentially changed. It is only necessary for the starting point to be specified in advance, and the present location of the vehicle, an arbitrary point selected by the user, or the like can be used as the starting point. When the planned travel route is input, for example, a configuration in which the selected planned travel route is displayed in a display manner different from manners in which other roads are displayed may be used.

It is only necessary for the endpoint-arrival-time-estimating means to be capable of estimating the endpoint-arrival time at which the vehicle can reach the endpoint of the planned travel route. Accordingly, the endpoint-arrival time can be estimated by setting a starting time at which the vehicle starts from the starting point of the planned travel route, and by adding a time necessary for the vehicle to reach the endpoint in a case where the vehicle travels by the planned travel route to the starting time. The present time, an arbitrary time selected by the user, or the like can be appropriately selected as the staring time.

It is only necessary for the traffic-information-obtaining means to be capable of obtaining the traffic information for a case where the vehicle starts to travel from the endpoint at the endpoint-arrival time. In other words, because a route that the vehicle can take after reaching the endpoint of the planned travel route is undetermined, the traffic-information-obtaining means can estimate traffic information for a case where the vehicle travels to an arbitrary road or an arbitrary point after starting from the endpoint as a reference point at the endpoint-arrival time. In this case, it is only necessary for the arbitrary road or the arbitrary point to be different from the endpoint. Additionally, when the vehicle travels by the planned travel route, it is preferable that the arbitrary road not include the endpoint or the arbitrary point not coincide with the endpoint, and that the arbitrary road or the arbitrary point be located in a direction allowing the vehicle not to return to the direction of the planned travel route.

It is only necessary for the traffic information to be traffic information which is referred to in a case where the user selects a planned travel route that the vehicle can take after reaching the endpoint. For example, congestion information or regulatory information concerning an arbitrary road can be used as the traffic information. An estimated travel time at which the vehicle can reach an arbitrary road by traveling may be used as the traffic information.

In order to highly accurately estimate the traffic information, it is preferable that an arbitrary-road-arrival time at which the vehicle can reach an arbitrary road in a case where the vehicle starts to travel from the endpoint at the endpoint-arrival time be obtained, and that traffic information for the arbitrary-road-arrival time be estimated. However, in order to reduce the load of processes, traffic information concerning the arbitrary road for the endpoint-arrival time may be obtained. As a configuration in which traffic information for the arbitrary-road-arrival time at which the vehicle can reach the arbitrary road is obtained, for example, the following configuration can be used: traffic information concerning the arbitrary road for each time segment is written in a storage medium; the arbitrary-road-arrival time at which the vehicle can reach the arbitrary road is estimated; and traffic information for the arbitrary-road-arrival time is obtained.

The display-control means displays the traffic information obtained in the above-described manner on the display means. Accordingly, while the user who inputs the planned travel route through the planned-travel-route-accepting means visually identifies the traffic information, the user can select a planned travel route that the vehicle can take after reaching the endpoint such that the planned travel route can be selected as a route having a more preferable traffic condition. For example, when congestion information or regulatory information is displayed as the traffic information, the user can set the planned travel route so that the vehicle can travel while avoiding congestion or a regulation. Thus, when the user continuously inputs a planned travel route while visually identifying the map on the display means, the user can input a planned travel route having a traffic condition that seems to be more preferable for the user, and can determine the planned travel route to a destination that the user wants to reach.

In a configuration in which the endpoint-arrival time is obtained, information showing an estimated travel time set for each time segment for each link set on the map may be used. In other words, when a storage medium in which such information is written is referred to, an estimated travel time for each time segment for each link corresponding to a road included in the planned travel route is obtained. Accordingly, estimated travel times are summed, and the sum of the estimated travel times is added to the starting time set in advance, whereby the endpoint-arrival time can be easily obtained. Since the above-described information is set for each time segment, the user can refer to the estimated travel time for each time segment in consideration of a time that passes as the vehicle travels. Thus, an accurate time that passes in a case where the vehicle travels by the planned travel route can be estimated.

It is only necessary for the information showing the estimated travel time to be written in a storage medium at least before the information is referred to. Such information may be generated in advance and written in a storage medium. The information may also be obtained through a communication, such as a vehicle-to-vehicle communication, a road-to-vehicle communication, or a satellite communication, and be sequentially updated.

According to an aspect of the present invention, although the route from the starting point of the planned travel route to the endpoint of the planned travel route is determined, a route from the endpoint of the planned travel route to an arbitrary road is not determined. For this reason, the arbitrary-road-arrival time at which the vehicle can reach the arbitrary road in a case where the vehicle travels from the endpoint of the planned travel route is roughly estimated. In order to perform this estimation as accurately as possible, a configuration in which a storage medium in which information showing an estimated travel distance per unit time set for each time segment for each section set on the map or information showing an estimated travel time is written is referred to may be used.

More specifically, when the information showing an estimated travel distance per unit time or the information showing an estimated travel time is referred to, a time at which the vehicle can reach each section in a case where the vehicle starts to travel from the endpoint at the endpoint-arrival time can be easily obtained. For example, when the information showing an estimated travel distance per unit time set for each time segment for each section set on the map is referred to, an estimated travel time for a case in which the vehicle travels in an arbitrary section can be roughly calculated.

An operation of estimating the arbitrary-road-arrival time on the basis of the estimated travel distance per unit time can be performed in various types of manners. For example, when distances that the vehicle can travel for specified time intervals in are estimated, a plurality of circles whose center is the endpoint of the planned travel route and whose radii are the sums of the distances that the subject vehicle can travel for the time intervals in are defined on the map. Consequently, times at which the subject vehicle can reach the vicinity of the circumferences of the circles can be estimated. An arbitrary-road-arrival time at which the vehicle can reach an arbitrary road located between the circumferences can be estimated, for example, by an interpolation operation of times at which the vehicle can reach the circumferences.

When a distance necessary to travel from a central point of a section to a central point of another section is obtained, a time necessary to travel for the distance can be obtained. Accordingly, an arrival time at which the vehicle can reach the central point of another section can be obtained. When the time at which the vehicle can reach the central point of another section is considered as a time at which the vehicle can reach an arbitrary road in another section, the arbitrary-road-arrival time at which the vehicle can reach the arbitrary road can be obtained.

When an estimated travel distance per unit time is referred to, only an estimated travel distance per unit time for a section including the endpoint of the planned travel route may be referred to. An estimated travel time per unit time for each section in which the vehicle travels in a case where the vehicle travels from the section including the endpoint of the planned travel route to a section including an arbitrary road may be referred to.

When the information showing an estimated travel time set for each time segment for each section set on the map, e.g., information showing an estimated travel time necessary to travel from a certain section to an adjoining section or another section, is referred to, an estimated travel time necessary to reach the section including the arbitrary road from the section including the endpoint of the planned travel route can be easily obtained. When this estimated travel time is added to the endpoint-arrival time, the arbitrary-road-arrival time can be obtained.

Additionally, a configuration in which a selection of the arbitrary road is limited to avoid a display of unnecessary information may be used. For example, since the endpoint of the planned travel route is specified, a route that the vehicle can take after reaching the endpoint can be estimated on the basis of the relationship between the endpoint and the starting point of the planned travel route. This estimation, for example, can be performed in a case where an arbitrary road located in a direction allowing the vehicle not to return to the direction of the planned travel route is included in routes that the vehicle can take after reaching the endpoint. In such a case, a selection of the candidate for a road is limited such that only a road corresponding to a link that is connected to the endpoint and that extends from the endpoint in the direction to the destination can be the candidate, thereby easily estimating the route. The route estimated in such a manner is a road whose traffic information is to be displayed.

The route-selection-supporting device according to an aspect of the present invention can be configured, for example, so that the planned travel route from the starting point to the destination is set. In other words, the planned-travel-route-accepting means may be configured to accept an input of the destination. More specifically, the planned-travel-route-accepting means may be configured to accept an input of a planned travel route from an arbitrary starting point to the destination. In this case, because the planned travel route is a route from the starting point to the destination, it is sufficient to obtain traffic information concerning a point that may be included in the planned travel route as the traffic information.

Accordingly, when traffic information concerning an arbitrary road located in a direction from the endpoint of the planned travel route to the destination is obtained and displayed, necessary and sufficient information for a case of selecting the planned travel route can be provided. As a result, the load used to process extra information can be reduced. It is only necessary that an arbitrary road located in a direction from the endpoint of the planned travel route to the destination can be selected as a road whose information is to be obtained. For example, an arbitrary road located on the destination side with respect to a line that is perpendicular to a line connecting the endpoint of the planned travel route with the destination and that passes the endpoint can be set so as to be included in objects whose traffic information is to be displayed. In this case, in order to further limit a selection of an arbitrary road possibly located on a route from the endpoint to the destination, for example, a configuration in which a road included in each of various types of polygons that uses the endpoint as one of the apexes and that includes the destination is considered as the arbitrary road may be used.

The above-described route-selection-supporting device according to an aspect of the present invention in which a selection of a continuous road route is accepted to accept an input of the planned travel route and in which the endpoint-arrival time at which the vehicle can reach the endpoint is estimated to accurately estimate the traffic information concerning a road that the vehicle can travel along after reaching the endpoint can be realized as a program or a method. The above-described route-selection-supporting device, the program, or the method may be realized as a single route-selection-supporting device, or may be realized using each unit and a common part provided in a vehicle. They can be realized in various types of manners. For example, a navigation device including the above-described route-selection-supporting device, or a method or a program including the function of the route-selection-supporting device can be provided. Additionally, the route-selection-supporting device can be appropriately changed; for example, a portion of the route-selection-supporting device may be software or hardware. Furthermore, according to an aspect of the present invention, there is provided a recording medium that records a program used to control the route-selection-supporting device. The recording medium that records software may be a magnetic recording medium or an optical magnetic recording medium. Any recording medium that will be developed in the future may be used as the recording medium in the exactly same manner.

### BRIEF DESCRIPTION OF THE DRAWINGS

Fig. 1 is a block diagram of a navigation apparatus including a route-selection-supporting device.

Fig. 2 is an illustration showing estimated time information included in link information.

Fig. 3 is an illustration showing section information.

Fig. 4 is an illustration showing congestion information.

Fig. 5 is a flowchart of a route-selection-supporting process.

Fig. 6 is an illustration showing an exemplary display on a display surface.

Fig. 7 is an illustration showing an exemplary display on the display surface.

### DESCRIPTION OF THE PREFERRED EMBODIMENTS

Embodiments of the present invention will be described in the order of section headings as follows:
(1) Configuration of Navigation Apparatus
(1-1) Route Selection Supporting Process
(2) Other Embodiments

### (1) Configuration of Navigation Apparatus

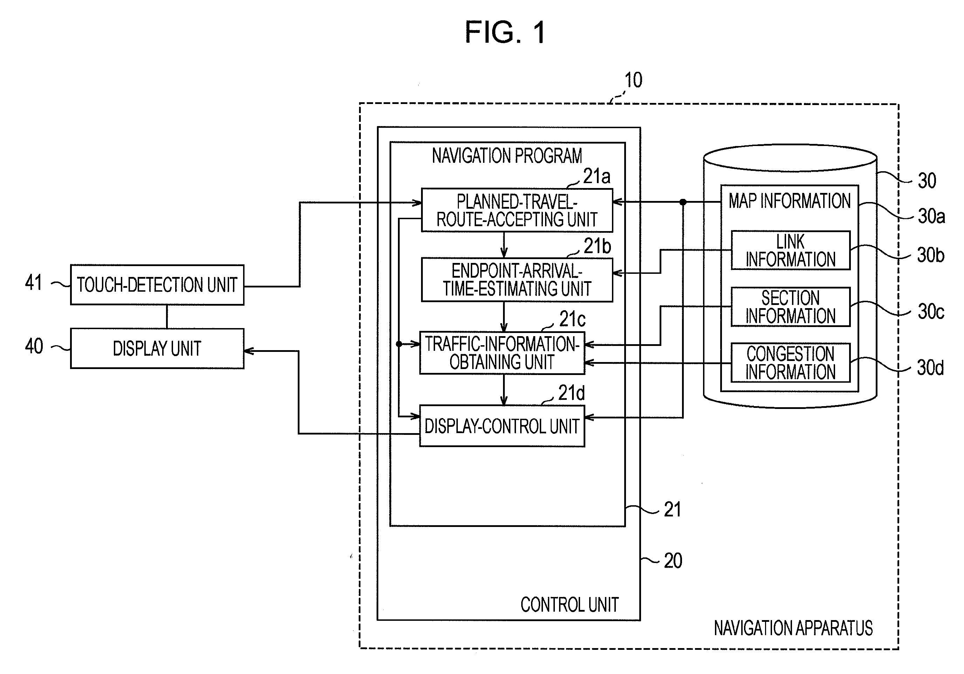

Fig. 1 is a block diagram showing the configuration of a navigation apparatus 10 including a route-selection-supporting device according to an embodiment of the present invention. The navigation apparatus 10 includes a control unit 20 having a central processing unit (CPU), a random-access memory (RAM), and a read-only memory (ROM), and so forth, and a storage medium 30. The control unit 20 can execute a program stored in the storage medium 30 or the ROM. In this embodiment, the control unit 20 can execute a navigation program 21 as one example of the program, and the navigation program 21 has a function of providing user support for selection of a planned travel route as one of functions of the navigation program 21.

A subject vehicle (a vehicle in which the navigation apparatus 10 is mounted) includes a global positioning system (GPS) receiver, a vehicle speed sensor, a speaker, which are not shown in Fig. 1, a display unit 40, a touch-detection unit 41, and so forth in order to run the navigation program 21. Signals between each of these units and the control unit 20 are sent or received using an interface between the unit and the control unit 20, which is not shown in Fig. 1. When the control unit 20 executes the navigation program 21, the above-described units obtain various types of information.
The control unit 20 performs, for example, route guidance based on a planned travel route on the basis of the various types of information.

The display unit 40 displays an image, for example, a map described below, on the basis of a control signal output from the control unit 20. On a display surface of the display unit 40, the touch-detection unit 41 that detects being touched with a finger or the like is provided. The touch-detection unit 41 outputs a signal indicating a position touched with a finger or the like on the display surface. The control unit 20 receives this signal to identify the position touched with a finger or the like on the display surface.

In the storage medium 30, map information 30a used to perform guidance by the navigation program 21 is stored. The map information 30a includes not only data showing landmarks but also link information 30b, section information 30c, and congestion information 30d.

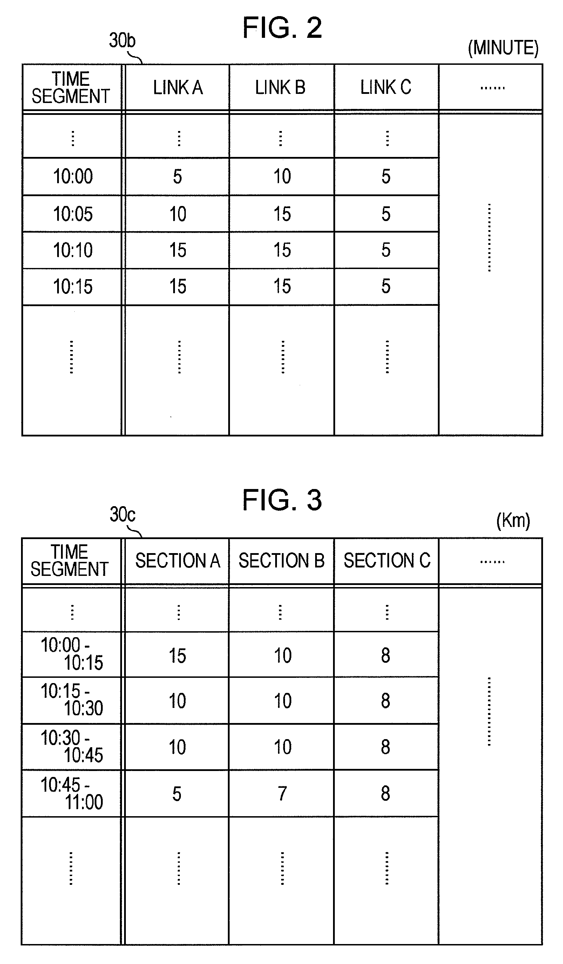

The link information 30b includes data showing coordinates of nodes set on roads and link data showing connections between nodes. Additionally, in this embodiment, the link information 30b includes estimated time information showing an estimated travel time for each time segment for each link. Fig. 2 is an illustration showing the estimated time information included in the link information 30b. In this embodiment, time segments are defined on the basis of a predetermined time interval (a five-minute interval in an example shown in Fig. 2). Referring to Fig. 2, for each of the time segments, an estimated travel time necessary to travel along the length of each link (a link A, B, or C shown in Fig. 2), expressed in minutes, is defined.

The section information 30c shows an estimated travel distance per unit time in a case where the subject vehicle travels along roads included in each of a plurality of sections. In order to set these sections, a map is split into areas of a predetermined size (for example, sections 10 kilometers square, which form a mesh). In other words, in the section information 30c, without specifying roads in each of the sections, an average travel distance per unit time in a case where the subject vehicle travels along roads included in the section is specified and defined as an estimated travel distance.

Fig. 3 is an illustration showing the section information 30c. In this embodiment, time segments are defined on the basis of a predetermined time interval (a fifteen-minute interval in an example shown in Fig. 3). Referring to Fig. 3, for each of the time segments, an average travel distance in a case where the subject vehicle travels along roads in each section (a section A, B, or C shown in Fig. 3), expressed in km, is defined. Because the travel distance shows a travel distance that the subject vehicle can travel for each of the predetermined time interval in, the travel distance can be defined as an estimated travel distance per unit time for the predetermined time interval.

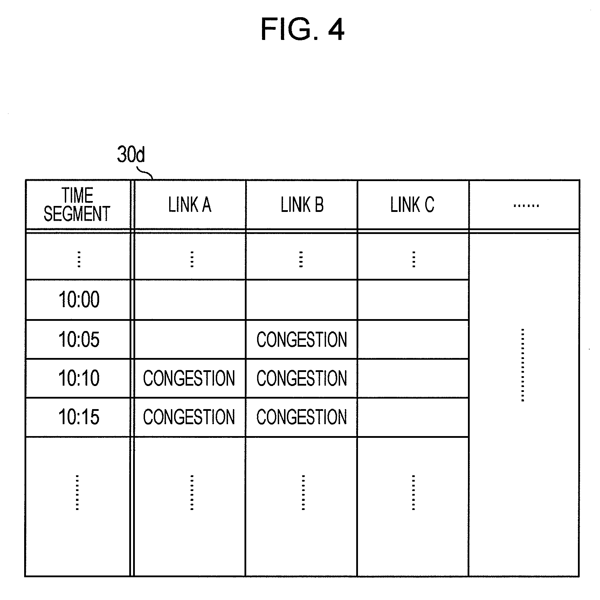

The congestion information 30d shows a congestion condition for each time segment for each link that is specified in advance on the basis of statistics. Fig. 4 is an illustration showing the congestion information 30d. In this embodiment, time segments are defined on the basis of a predetermined time interval (a five-minute interval in an example shown in Fig. 4). Referring to Fig. 4, for each time segment, whether congestion occurs or not along roads corresponding to each link (a link A, B, or C shown in Fig. 4) is shown as data.

### (1-1) Route Selection Supporting Process

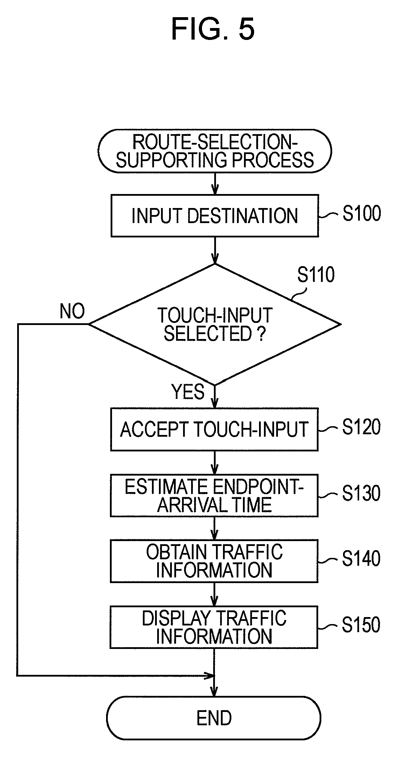

In this embodiment, when a planned travel route from the present location to a destination is set in the navigation program 21, processes are performed in accordance with a flow shown in Fig. 5. In this flow including the processes, first, a process in which a destination for route guidance is input in the navigation program 21 is performed (step S100). For example, a menu screen used to input the destination is displayed on the display unit 40, and an input of destination-selecting operation is accepted by an operation unit that is not shown in Fig. 1 or the touch-detection unit 41.

In this embodiment, a process in which the control unit 20 searches for a route from the present location to the destination can be performed. Additionally, a process can be performed in which an operation of inputting a route is performed by a user touching the display surface of the display unit 40, namely, performing a touch input, to specify a planned travel route himself/herself. In order to determine whether or not this process should be performed, the control unit 20 determines, in the navigation program 21, whether or not a user selects the process of inputting a planned travel route through a touch input (step S110).

In step S110, when it is determined that the user does not select the process using a touch input, the control unit 20 skips, in the navigation program 21, processes of steps S120 to S150 according to the embodiment of the present invention. Accordingly, the control unit 20 searches for and determines a route from the present location to the destination. In step S110, when it is determined that the user selects the process using a touch input, the control unit 20 provides processes of supporting route selection performed using a touch input in steps S120 to S 150.

In order to perform these processes, the navigation program 21 provides the functions of a planned-travel-route-accepting unit 21a, an endpoint-arrival-time-estimating unit 21b, a traffic-information-obtaining unit 21c, and a display-control unit 21d. The display-control unit 21d can output a signal to the display unit 40 so that a corresponding image is displayed on the display unit 40. For the setting of a planned travel route, the display-control unit 21d refers to the map information 30a to obtain information concerning roads as the candidates for the planned travel route and displays a map image including the roads on the display unit 40.

With the map image displayed on the display unit 40, the planned-travel-route-accepting unit 2 1 a accepts the above-described touch input (step S 120). In other words, the planned-travel-route-accepting unit 21a receives a signal output from the touch-detection unit 41. On the basis of this signal output from the touch-detection unit 41, the planned-travel-route-accepting unit 21a obtains a position where a finger of the user or the like has touched the display surface. The positions of roads on the map displayed on the display unit 40 under the control of the display-control unit 21d are known in advance. Accordingly, the planned-travel-route-accepting unit 21a refers to the map information 30a to determine whether or not the touched position corresponds to the position of a road on the map. When the touched position corresponds to the position of a road on the map, the planned-travel-route-accepting unit 2 1 a accepts the selection of the road.

Additionally, when a finger or the like continuously touches the display surface, the planned-travel-route-accepting unit 21 a recognizes that roads corresponding to the trajectory of the touched positions are selected. In such a case, when the selected roads constitute a continuous road route, the planned-travel-route-accepting unit 21 a accepts the continuous road route as a planned travel route. In this embodiment, the starting point of a planned travel route is the present location, and the endpoint of the planned travel route is the location corresponding to the position touched with a finger or the like on the display unit 40. The display-control unit 21d displays the planned travel route on the display unit 40. More specifically, in this embodiment, the planned travel route is highlighted (for example, displayed with thick line) on the map so that it can be distinguished from other roads. The display-control unit 21d outputs a signal used to perform the highlighted display to the display unit 40.

After the planned-travel-route-accepting unit 21a accepts the planned travel route, the endpoint-arrival-time-estimating unit 21b estimates an endpoint-arrival time at which the subject vehicle can reach the endpoint of the planned travel route (step S130). In other words, the endpoint-arrival-time-estimating unit 21b refers to the link information 30b to estimate an endpoint-arrival time at which the subject vehicle can reach the endpoint in a case where it travels by the planned travel route accepted in the above-described manner.

In this embodiment, an endpoint-arrival time is calculated by estimating a travel time in a case where the subject vehicle starts from the present location at the present time on the basis of the link information 30b. More specifically, regarding the planned travel route, an estimated travel time corresponding to a link from the present location as a reference point to the next node is obtained, and then the estimated travel time is added to the present time to obtain an estimated time of arrival at the next node. After that, this next node is considered as a reference point and a process similar to the above-described process is repeated. This process is repeated until reaching the endpoint of the planned travel route, whereby the endpoint-arrival time is estimated. When the endpoint of the planned travel route does not coincide with any node, for example, a process in which an estimated travel time is corrected in accordance with the ratio of the distance corresponding to a link to the distance from a node of the link to the endpoint may be performed to obtain the corrected estimated travel time as an estimated travel time corresponding to the link.

After the endpoint-arrival-time-estimating unit 21b estimates the endpoint-arrival time, the traffic-information-obtaining unit 21c obtains traffic information concerning each road located between the endpoint of the planned travel route and the destination (step S 140). More specifically, the traffic-information-obtaining unit 21c refers to the section information 30c and the congestion information 30d to obtain traffic information for a case where the subject vehicle starts to travel from the endpoint of the planned travel route to an arbitrary road. In this embodiment, on the basis of the estimated travel distances defined on a per-unit-time basis defined in the section information 30c, the traffic-information-obtaining unit 21c obtains an arbitrary-road-arrival time at which the subject vehicle can reach an arbitrary road in a case where the subject vehicle travels from the endpoint to the arbitrary road. Then, with reference to the congestion information 30d, the traffic-information-obtaining unit 21c obtains traffic information for the arbitrary-road-arrival time. Traffic information in this embodiment includes congestion information for each link and the above-described estimated travel distances for fifteen-minute intervals.

In this embodiment, the traffic-information-obtaining unit 21c refers to the section information 30c for a section including the endpoint of the planned travel route in order to obtain the arbitrary-road-arrival time. The traffic-information-obtaining unit 21c obtains estimated travel distances that the subject vehicle can travel in after the time segment including the endpoint-arrival time and which are defined for fifteen-minute intervals. When the endpoint-arrival time is not a boundary value (0, fifteen minutes, etc.) of one of the time segments included in the section information 30c, the endpoint-arrival time is corrected.

For example, in the example shown in Fig. 3, when an endpoint-arrival time at which the subject vehicle can reach an endpoint included in the section A is 10:10, an estimated travel distance defined in the section information 30c for a time segment from 10:00 to 10:15, which includes in the endpoint-arrival time, is 15 km. However, since a range of time in which the subject vehicle can travel after the endpoint-arrival time is from 10:10 to 10:15, 15 km is multiplied by 5/15 to obtain 5 km as a corrected estimated travel distance. After 10:15, each of 10 km, 10 km, and 5 km is obtained as an estimated travel distance for a fifteen-minute interval in accordance with the estimated travel distances for the section A defined in the section information 30c.

When the estimated travel distances that the subject vehicle can travel after the endpoint-arrival time in specified in the above-described manner, distances that the subject vehicle can travel for specified time intervals in are specified. As a result, an arbitrary-road-arrival time can be easily estimated on the basis of the distances that the subject vehicle can travel for the specified time intervals in. More specifically, in this embodiment, concentric circles whose center is the endpoint of the planned travel route and whose radii are the sums of the estimated travel distances described above are defined, thereby estimating the arbitrary-road-arrival time.

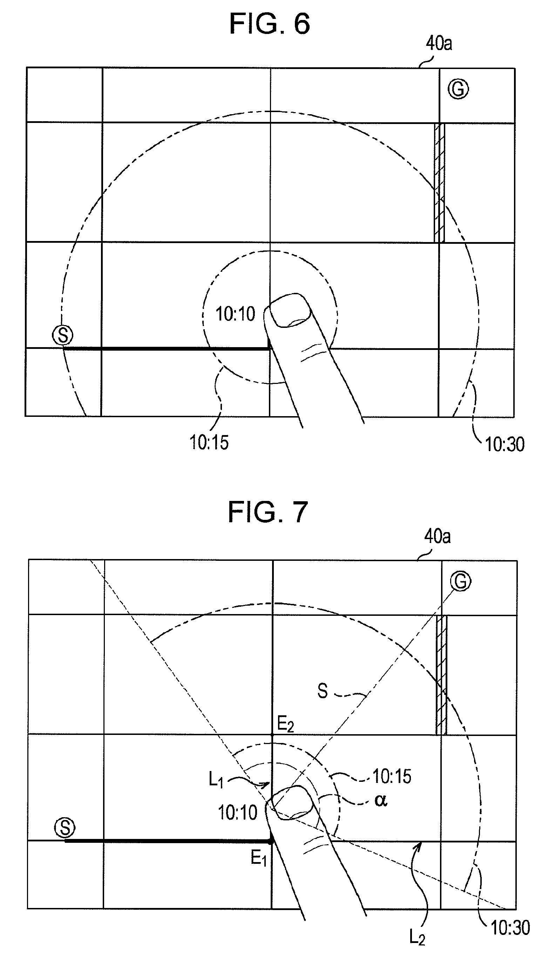

Fig. 6 is an illustration exemplifying a state in which a map is displayed on a display surface 40a of the display unit 40. Such a display is obtained under the control of the display-control unit 21d described below. Fig. 6 is also an illustration showing the estimation of arbitrary-road-arrival times performed by the traffic-information-obtaining unit 21c. More specifically, the two-dot chain lines shown in Fig. 6 form concentric circles whose center is the endpoint of the planned travel route and whose radii are the sums of the estimated travel distances described above. These concentric circles can be supposed in the case where the estimated travel distances for fifteen-minute intervals are obtained as shown in the above-described example.

In other words, an example in which the endpoint-arrival time, at which the subject vehicle can reach the endpoint of the planned travel route, is 10:10 is shown in Fig. 6. The concentric circles with two-dot chain lines are a circle whose radius is the estimated travel distance for the time segment from 10:10 to 10:15 and a circle whose radius is the estimated travel distance for the time segment from 10:10 to 10:30. When the above-described concentric circles are supposed, a time at which the subject vehicle can reach the periphery of each of the circles can be estimated to be 10:15 or 10:30. An arbitrary-road-arrival time at which the subject vehicle can reach an arbitrary road located between the peripheries of these circles can be also easily estimated. For example, an interpolation operation or the like can be performed to obtain such an arbitrary-road-arrival time. When the arbitrary-road-arrival time is obtained in the above-described manner, the traffic-information-obtaining unit 21c refers to the congestion information 30d to determine whether or not there is congestion at the arbitrary-road-arrival time. When information showing congestion of the arbitrary road is included in the congestion information 30d, the traffic-information-obtaining unit 21c obtains the information as congestion information concerning the arbitrary road.

The display-control unit 21d displays the congestion information concerning the arbitrary road obtained in the above-described manner on the display unit 40 (step S150). In this embodiment, the congestion information is highlighted (for example, in a color for a road with a congestion that is different from a color for other roads) so that the road with the congestion can be distinguished from other roads. A configuration in which traffic information other than congestion information, for example, an arbitrary-road-arrival time, is displayed may be used.

Fig. 6 is a diagram exemplifying a state in which a map is displayed on the display surface 40a as described above. Referring to Fig. 6, on the map, the present location and the destination are represented by S and G, respectively. When the touch input is accepted to specify the planned travel route in the above-described step S120, the planned travel route is highlighted on the display surface 40a. More specifically, the planned travel route is displayed with thick line, and roads other than the planned travel route are displayed with thin lines. A state in which the planned travel route is selected by being touched with a human finger is shown in Fig. 6. In the process of step S120, a position on the display surface 40a touched with the human finger represents the endpoint of the planned travel route, and the position of this endpoint is sequentially changed in accordance with the movement of the finger.

In such a state in which a map is displayed, when the display-control unit 21d performs the above-mentioned process of step S150, a link with a high probability of occurrence of congestion, which is specified in the process of step S140, is highlighted. The hatched portion in Fig. 6 shows a state in which the highlighted link is displayed. In the display described above, because the congestion information concerning each road is displayed while the user provides a touch input with a finger of the user, the user can set the planned travel route so as to avoid congestion. In this embodiment, although the above-described concentric circles with two-dot chain lines are not displayed on the display unit 40, the concentric circles or the arbitrary-road-arrival time may be displayed on the display unit 40.

In the configuration described above, the endpoint-arrival time can be estimated on the basis of the planned travel route that is selected by the user and that is already determined. In other words, the endpoint-arrival time can be estimated on the basis of estimated travel times for links included in the planned travel route. Accordingly, the endpoint-arrival time can be accurately estimated. Additionally, in this embodiment, the arbitrary-road-arrival time at which the subject vehicle can reach an arbitrary road in a case where the subject vehicle starts the endpoint at the endpoint-arrival time is estimated. Accordingly, the arbitrary-road-arrival time at which the subject vehicle can reach an arbitrary road in a case where the subject vehicle starts the present location of the subject vehicle or the traffic information can be estimated in a condition in which a location closer to the arbitrary road is considered as a reference point (the endpoint of the planned travel route is considered as a reference point), compared with in a condition without specifying any planned travel route. Thus, more accurate traffic information can be obtained.

### (2) Other Embodiments

The embodiment described above is an exemplary embodiment of the present invention. In the above-described embodiment, when the user inputs the planned travel route through a touch input, traffic information concerning an arbitrary road along which the subject vehicle can travel after reaching the endpoint of the planned travel route can be provided for the user. As long as a similar function can be embodied, various embodiments can be used. For example, in the above-described embodiment, regarding the display of traffic information, traffic information concerning roads located in arbitrary directions in a case where the endpoint of the planned travel route is considered as a center is displayed on the display unit 40. However, a configuration in which only traffic information which is highly probably referred to is displayed to avoid a display of useless information may be used.

More specifically, as the broken line indicates in Fig. 7, traffic information may be displayed in a range of a sector with a central angle α whose center is the endpoint of the planned travel route and which is symmetric with respect to a straight line S running from the endpoint to the destination (the one-dot chain line shown in Fig. 7). With this configuration, the process of the display can be performed only for necessary and sufficient traffic information (traffic information concerning each road located in a direction from the endpoint of the planned travel route to the destination), whereby the load of processes can be reduced.

The central angle α of the sector shown in Fig. 7 is equal to or smaller than 180°. Arbitrary roads located on the destination side with respect to a line that is perpendicular to the straight line S and that passes the endpoint may be set so as to be included in objects whose traffic information is to be displayed. The sector may be appropriately adjusted. The shape showing a range in which objects whose traffic information is to be displayed is set is not limited to a sector. For example, a configuration in which roads included in each of various types of polygons that uses the endpoint as one of the apexes and that includes the destination are considered as the arbitrary roads may be used. Additionally, a configuration in which only traffic information concerning roads or points located in a predetermined range set in the vicinity of the endpoint of the planned travel route is displayed may be used, thereby reducing the load of processes.

Furthermore, a route that the subject vehicle can take after reaching the endpoint of the planned travel route (a route by which the subject vehicle approaches from the endpoint to the destination) is estimated on the basis of connections of links. Any route other than the estimated route may be excluded from objects whose traffic information is to be provided. For example, the endpoint of the planned travel route selected by being touched with a finger shown in Fig. 7 is a middle point of a link L₁. In order to travel along a link L₂ extending from a terminal E₁ that is a terminal point of the link L₁ and that is located farther to the destination than the other terminal of the link L₁, it is necessary for the subject vehicle to travel in a direction opposite to the direction from the selected endpoint of the planned travel route to the destination, or to take a detour including a route by which the subject vehicle recedes from the destination.

In such a case, the following configuration may be used: a terminal E₂ that is a terminal of the link L₁ and that is located closer to the destination than the other terminal of the link L₁ is considered as the endpoint of the planned travel route; only a link that extends from the terminal E₂ and that allows the subject vehicle to approach the destination is considered as an object whose traffic information is to be provided; and the above-described link L₂ or the like is excluded. In this configuration, since necessary and sufficient traffic information can be processed, the load of processes can be reduced. Furthermore, needless to say, a route that the subject vehicle can take after reaching the endpoint of the planned travel route can be estimated in various types of manners. For example, a configuration in which roads excluding the roads located on the side of the specified planned travel route are considered as the candidates for a route to be estimated may be used.

In the above-described embodiment, in the link information 30b, the section information 30c, and the congestion information 30d, the information for links or sections is defined for each time segment. However, an estimated travel time or congestion information for each link, or an estimated travel distance for each section may be defined in accordance with a type of a road, such as an ordinary road or an expressway. Regarding a time segment, the information for links or sections may be classified and defined by an element by which information can be changed, such as a season, a day of week, a holiday, a day on which an event takes place, in addition to a classification by a fixed time interval.

Furthermore, it is only necessary for the traffic information to be traffic information which is referred to in a case where the user selects a planned travel route that the subject vehicle can take after reaching the endpoint. Accordingly, the traffic information is not limited to congestion information, and may be regulatory information. Additionally, it is only necessary for the link information 30b, the section information 30c, and the congestion information 30d to be written in the storage medium 30 before they are referred to. Not only such a configuration in which these information are generated in advance and written in a storage medium, but also a configuration in which these information are obtained through various communications, such as vehicle-to-vehicle communications, road-to-vehicle communications, satellite communications, or communications with a distribution center that distributes congestion information, and sequentially updated may be used. Then, weighting may be applied to information obtained through a communication and information written in a storage medium, and the information after the weighting may be added. The congestion information may show not only whether there is congestion or not but also the level of congestion. The congestion information may be associated with regulatory information. For example, a configuration in which the occurrence of congestion with different levels is estimated in accordance with the type of a regulation may be used.

The above-described traffic-information-obtaining unit 21c estimates the arbitrary-road-arrival time at which the subject vehicle can reach an arbitrary road on the basis of information for the section including the endpoint of the planned travel route. However, it is only necessary for the traffic-information-obtaining unit 21c to be capable of obtaining traffic information for a case where the subject vehicle starts to travel from the endpoint, and may obtain the arbitrary-road-arrival time in another manner. For example, an average distance from a central location of the section including the endpoint of the planned travel route to a central location of another section is calculated. A time necessary to travel for the average distance is roughly estimated on the basis of the estimated travel distances defined on a per-unit-time basis defined in the section information 30c.

In such a case, the arbitrary-road-arrival time at which the subject vehicle can reach an arbitrary road included in another section may be different for each section. Additionally, in order to reduce the load of processes, the estimation of the arbitrary-road-arrival time is omitted, and traffic information concerning the arbitrary road for the endpoint-arrival time may be obtained. Any road including a point different from the endpoint can be used as the arbitrary road. Additionally, when the subject vehicle travels by the planned travel route, it is preferable that the arbitrary road not include the endpoint, and that the arbitrary road be located in a direction allowing the subject vehicle not to return to the direction of the planned travel route.

It is only necessary for the touch-detection unit 41 to be capable of detecting touching of a display surface to accept a selection of a continuous road route. The touch-detection unit 41 may be configured to detect being touched with a finger or to detect being touched with an input device, such as a stylus. Various types of methods can be used as the detection method. Various types of touch panels, for example, that can detect a pressure to a display surface, or a capacitance or an optical change on a display surface can be used.

When the planned-travel-route-accepting unit 21a accepts a selection of a continuous road route, the planned-travel-route-accepting unit 21a may be configured to detect touching of a display surface according to a movement of tracing a road on the display surface to accept an input of the planned travel route. The planned-travel-route-accepting unit 21a may also have a configuration in which an operation of selecting an individual road is repeated to accept an input of the planned travel route. Furthermore, it is only necessary for the planned-travel-route-accepting unit 21 a to be capable of accepting a selection of a continuous road route, and the configuration of the planned-travel-route-accepting unit 21a is not limited to a configuration in which the planned-travel-route-accepting unit 21a detects touching of a display surface to accept a selection. The planned-travel-route-accepting unit 21 a may use a configuration in which a road displayed on a display unit is selected with an input device, such as a cross key or a remote controller.

The starting point of the planned travel route may be the present location of the subject vehicle as described above and may also be another point. For example, an arbitrary point selected by the user, or the like can be used as the starting point. The stating time at the starting point is not limited to the present time, and a configuration in which an arbitrary time selected by the user, or the like is used as the starting time may be used.

In the above-described embodiment, distances that the subject vehicle can travel in are defined for specified time intervals in the section information 30c. Then, a plurality of circles whose center is the endpoint of the planned travel route and whose radii are the sums of the distances that the subject vehicle can travel for time intervals in are defined. Consequently, times at which the subject vehicle can reach the vicinity of the circumferences of the circles are estimated. However, the method for obtaining the arbitrary-road-arrival time is not limited to the method in the above-described embodiment.

When the section information 30c is referred to, as described above, only the estimated travel distance per unit time for the section including the endpoint of the planned travel route may be referred to. An estimated travel distance per unit time for each section in which the subject vehicle can travel in a case where the subject vehicle travels from the section including the endpoint of the planned travel route to a section including an arbitrary road may be referred to.

Information showing an estimated travel time set for each time segment for each section set on a map may be used as the section information 30c. In other words, when such information is referred to as the section information 30c, information showing an estimated travel time necessary to travel from a certain section to an adjoining section or another section can be obtained. Accordingly, an estimated travel time necessary to travel from the section including the endpoint of the planned travel route to a section including the arbitrary road can be easily obtained. Thus, when such an estimated travel time is added to the endpoint-arrival time, the arbitrary-road-arrival time can be obtained.

In the above-described embodiment, the traffic information is defined for each link. However, after traffic information is defined for each time segment for each section, a configuration in which the traffic information for each section is displayed may be used. Although it is difficult to correspond the traffic information to links in this configuration, traffic information concerning an arbitrary road can be obtained in a process with a light load.
According to a route-selection-supporting device and method for supporting route selection, a selection of a continuous road route on a map displayed on a display unit 40 is accepted. The continuous road route is accepted as a planned travel route. An endpoint-arrival time at which a vehicle can reach an endpoint of the planned travel route in a case where the vehicle travels by the planned travel route is estimated. Traffic information 30d for a case where the vehicle starts to travel from the endpoint at the endpoint-arrival time is obtained. The traffic information 30d is displayed on the display unit 40.

## Claims

1. A route-selection-supporting device comprising:
display means (40) for displaying an image including a map;
planned-travel-route-accepting means (21a) for accepting a selection of a continuous road route on the map and accepting the continuous road route as a planned travel route;
endpoint-arrival-time-estimating means (21b) for estimating an endpoint-arrival time at which a vehicle can reach an endpoint of the planned travel route in a case where the vehicle travels by the planned travel route;
traffic-information-obtaining means (21c) for obtaining traffic information for a case where the vehicle starts to travel from the endpoint at the endpoint-arrival time; and
display-control means (21 d) for displaying the traffic information on the display means (40).

2. The route-selection-supporting device according to Claim 1, wherein the planned-travel-route-accepting means (21a) includes a touch-detection unit (41) that detects touching of a display surface of the display means (40), and accepts the continuous road route as the planned travel route in a case where the touch-detection unit (41) detects a touch corresponding to the continuous road route.

3. The route-selection-supporting device according to Claim 1 or 2, wherein the endpoint-arrival-time-estimating means (21b) refers to a storage medium (30) in which information (30b) showing estimated travel times set for time segments for links (A, B, C) set in correspondence with roads on the map is written, and adds estimated travel times for time segments for links (A, B, C) corresponding to the planned travel route to a starting time set in advance to obtain the endpoint-arrival time.

4. The route-selection-supporting device according to any one of Claims I to 3, wherein the traffic-information-obtaining means (21 c) is capable of obtaining an arbitrary-road-arrival time at which the vehicle can reach an arbitrary road in a case where the vehicle starts to travel from the endpoint, and obtaining traffic information (30d) concerning the arbitrary road for the arbitrary-road-arrival time.

5. The route-selection-supporting device according to Claim 4, wherein the traffic-information-obtaining means (21 c) refers to a storage medium (30) in which information (30c) showing an estimated travel distance per unit time set for each time segment for each section set on the map and/or information (30b) showing an estimated travel time set for each time segment for each section set on the map is written, and obtains a time as the arbitrary-road-arrival time at which the vehicle can reach each section in a case where the vehicle starts to travel from the endpoint at the endpoint-arrival time on the basis of the information (30c) showing an estimated travel distance or the information (30b) showing an estimated travel time.

6. The route-selection-supporting device according to any one of Claims 1 to 5,
wherein the planned-travel-route-accepting means (21a) accepts an input of a destination, and
wherein the traffic-information-obtaining means (21 c) obtains traffic information (30d) concerning the arbitrary road located in a direction from the endpoint of the planned travel route to the destination.

7. A route-selection-supporting method comprising:
a planned-travel-route-accepting step (S120) of accepting a selection of a continuous road route on a map displayed on a display unit (40) and accepting the continuous road route as a planned travel route;
an endpoint-arrival-time-estimating step (S 130) of estimating an endpoint-arrival time at which a vehicle can reach an endpoint of the planned travel route in a case where the vehicle travels by the planned travel route;
a traffic-information-obtaining step (S 140) of obtaining traffic information (30d) for a case where the vehicle starts to travel from the endpoint at the endpoint-arrival time; and
a display-control step (S 150) of displaying the traffic information (30d) on the display unit (40).
